# EUROPEAN PATENT APPLICATION

(11) **EP 2 224 570 A2**
(43) Date of publication of application: **01.09.2010**
(21) Application number: 10153018.6
(22) Date of filing: 09.02.2010
(51) Int. Cl.: H02J 3/28, H02J 15/00

(54) **System and method for improving power grid stability**

(30) Priority: 26.02.2009 US 393402
(71) Applicant: General Electric Company, Schenectady, NY 12345 (US)
(72) Inventor: Beaudoin, Ronald, Simpsonville, SC 29681 (US)
(74) Representative: Bedford, Grant Richard

(57) **Abstract**

A control system (200) includes a droop control device (202) coupled between a power grid (120) and a power storage device (222), the droop control device is configured to distribute power at a selected amperage to the power storage device based on a present frequency of power produced by the power grid. Accordingly, a method is provided for distributing power from a droop control device to a power storage device or a power grid. The method includes determining a present frequency of power produced by the power grid, distributing amperage to the power storage device, wherein the amperage is based on the present frequency of power produced by the power grid, and distributing a first amperage from the power storage device to the power grid if the present frequency of power produced by the power grid is below a threshold frequency of power. The method may include determining a present frequency of power produced by a power grid, accessing a look-up table of amperages that correspond to frequencies of power produced by the power grid and identifying an amperage that corresponds to the present frequency of power produced by the power grid.

## Description

The field of the invention relates generally to a system and method for distributing power from a droop control device to a power storage device or from the droop control device to a power grid based on a present frequency of power produced by the power grid.

Electric power grids typically include a number of power generating systems to supply electricity to the power grid and a number of electricity consumers that draw electricity from the power grid. When the generation and consumption of electricity are substantially equal, the power grid generates power at a substantially constant frequency. Grid power frequency is normally a parameter maintained at a substantially stable value. Examples of a nominal standard grid power frequency for European systems and North American systems are 50 Hz and 60 Hz, respectively.

Frequency deviations of a transient nature may result from increased or decreased consumption and/or removal or addition of power generation systems. Increased consumption and removal of power generation systems tend to cause a decrease in the grid power frequency. Decreased consumption and addition of power generation systems tend to cause an increase in the grid power frequency. Power consumption and power generation are time-dependent variables which may cause frequency variations in a range of approximately +0.5 Hz to -0.5 Hz. Generally, frequency transients are of a short duration, i.e., measured in seconds to minutes, and as discussed above, small magnitudes. One conventional method to mitigate the frequency transient magnitude and duration is to have an amount of standby power generation capacity, sometimes referred to as a system reserve, available within the grid to respond to the frequency decrease within seconds of the transient. For example, a particular generating unit on the grid may be induced to initiate a fast increase in its associated power generation output to the grid. However, not all power grids have conventional system reserves available within the grid to respond to a frequency change. Further, power grids that have conventional system reserves will recognize less wear and tear if an alternative power supply were added to help respond to a frequency change.

In one aspect according to the present invention, a control system including a droop control device coupled between a power grid and a power storage device is provided. The droop control device is configured to distribute power at a selected amperage to the power storage device based on a present frequency of power produced by the power grid.

In another aspect, a method is provided for distributing power from a droop control device to a power storage device or a power grid. The method includes determining a present frequency of power produced by the power grid, distributing amperage to the power storage device, wherein the amperage is based on the present frequency of power produced by the power grid, and distributing a first amperage from the power storage device to the power grid if the present frequency of power produced by the power grid is below a threshold frequency of power.

In yet another aspect, a method is provided for distributing power from a droop control device to a power storage device. The method includes determining a present frequency of power produced by a power grid, accessing a look-up table of amperages that correspond to frequencies of power produced by the power grid, identifying an amperage that corresponds to the present frequency of power produced by the power grid, and distributing the identified amperage to the power storage device.

The present disclosure is described in detail below with reference to the attached figures, in which:
Figure 1 is an exemplary operating environment of a power grid system.
Figure 2 is a block diagram of an exemplary control system with a droop control device electrically connected to a power grid and a power storage device.
Figure 3 is a flow diagram of an exemplary method for distributing power from a droop control device to a power storage device or a power grid.

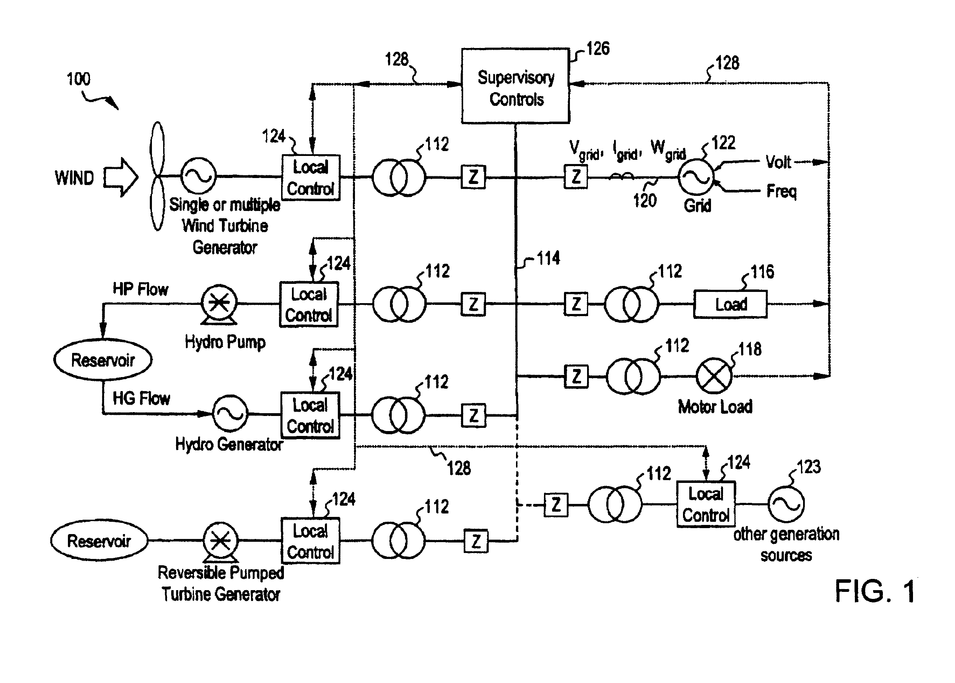

Referring initially to Figure. 1, an exemplary operating environment is shown and designated generally as power system 100. Power system 100 is but one example of a suitable environment and is not intended to suggest any limitation as to the scope of use or functionality of the present disclosure. Neither should power system 100 be interpreted as having any dependency or requirement relating to any one or combination of components illustrated herein. For example, power system 100 may include a power grid, such as an integrated, wind pumped hydro system that is configured as a grid-connected system. In one embodiment, power system 100 may include a closed power grid. In a further embodiment, power system 100 may be characterized by a wind turbine generator (which can be embodied by a single wind turbine generator or multiple wind turbine generators) operating in parallel with a hydro generator powered by water flow from a water source (e.g., a storage reservoir). Therefore, although the present disclosure will be directed to an integrated, wind pumped hydro system, one of ordinary skill in the art guided by the teachings herein provided will appreciate that the scope of the present disclosure is not limited to an integrated, wind pumped hydro system.

The power generated by wind generators 102 and hydro generators 104 is coupled (through transformers 112) to a common power bus 114, which is an AC bus in the embodiment illustrated. As will be illustrated hereinafter, however, a DC bus (e.g., such as the DC link of wind turbine conveners) may also be used as the common bus, which can provide a savings in terms of reducing hardware redundancy. Also shown coupled to common power bus 114 are various local loads 116 and 118, which may represent simple impedance loads, motor loads, or loads with power electronic interfaces, as well as other energy storage devices, such as batteries. As the embodiment of Figure 1 represents a grid-connected system, a connection of common power bus 114 to a power grid 120 is also illustrated, including each of the grid generation sources associated therewith (generally depicted at 122).

In addition to the local parallel combination of wind and hydro generators, in one embodiment, power system 100 may also optionally be configured with additional power generation or storage sources 123, such as gasoline/diesel engine powered generators, turbines, photovoltaic cells, fuel cells or storage batteries, for example.

As shown in Figure 1, an integrated, wind pumped hydro system (e.g., power system 100) may be managed through both local controls 124 and centralized supervisory controls 126 in order to overcome intermittency issues associated with wind generated power. Supervisory controls 126 communicate with individual local controls 124 through a communications bus 128. For a stand-alone configuration, the system voltage and frequency references are dynamically determined by one of the power components (e.g., wind or hydro) such that the load sharing capability is provided by local controls 124 or by supervisory controls 126. Supervisory controls 126 are also configured to provide energy management and regulatory controls. To this end, the supervisory controls can be configured to receive various types of input data (e.g., wind, hydrological forecast information) through an applicable network such as, for example, a local area network (LAN), wide area network (WAN), internet, wireless networks, and the like.

Electric power grids typically include a number of generation devices to supply electricity to the power grid and a number of electricity consumers that draw electricity from the power grid. When the generation and consumption of electricity are substantially equal, the power grid generates power at a substantially constant frequency, for example 60 units (Hz). However, if the generation and consumption are not equal, frequency deviations of a transient nature may result. These deviations may be caused by a change in consumption, e.g. an increase or a decrease in consumption of power, and/or a change in power generator removal or an addition of one or more power generation systems. For example, increased consumption and/or removal of power generation systems tends to cause a decrease of the grid power frequency, and a decreased consumption and/or an addition of one or more power generation systems tends to cause an increase of the grid power frequency.

In order to stabilize a grid power frequency, conventional power grids utilize generation devices, such as gas turbine generators and steam turbine generators, to provide droop control to the power grid. In these conventional systems, a change in an output of power of a generation device is driven by deviations in a frequency of power produced by the power grid, which provides an automatic adjustment of power generation to the power grid and therefore helps stabilize the power frequency produced by the power grid. For example, if the power frequency produced by the power grid drops below a target or threshold frequency, the power output of the generation device will go up in proportion to a magnitude of a drop in the frequency of power produced by the power grid. However, as mentioned above, not all power grid systems have generation devices that provide droop control and systems that are not configured to compensate for intermittency issues will have larger, and more frequent fluctuation in the grid power frequency.

The systems and methods described herein provide an alternative droop control that does not rely on conventional generation devices. This will not only be advantageous for power grid systems that do not have conventional generation systems, but power grid systems that do have conventional generation devices will experience less wear and tear because a reliance on the conventional generation devices will be less with the inclusion of the alternative droop control. Further, the alternative droop control provides a consumer with an ability to supply power to a power grid, which may provide the consumer with a lower rate from an electric company who owns the power grid system supplying electricity to the consumer.

As technology increases, more and more products are becoming less reliant on fossil fuels, and more reliant on electric power. For example, plug-in hybrid vehicles are growing increasingly popular. These plug-in hybrid vehicles are powered by an electric motor that receives power from a power storage device, such as a rechargeable battery. Plug-in hybrid vehicles can be plugged in to a 120-volt outlet (for instance each night at home, or during the workday at a parking garage) and charged. Thus, with a growing trend in plug-in hybrid cars, more and more homes have power storage devices that contain a substantial amount of power. Therefore, it may be desirable to provide a droop control between a power grid (e.g., power grid 120) and a power storage device, wherein the droop control device is configured to distribute power at a selected amperage to a power storage device based on a present frequency of power produced by power grid 120. Alternatively, it may be desirable to provide a droop control device configured to withdraw power at a selected amperage from the power storage device to the power grid 120 based on a present frequency of power produced by power grid 120. If the power frequency of power grid 120 is lower than, for example, a nominal standard grid power frequency, such as 50 Hz or 60 Hz, the droop control device may withdraw power from a power storage device and transfer the power to the power grid to help stabilize the frequency of power produced by the power grid. Further, if the power frequency of power grid 120 is higher than, for example, the nominal standard grid power frequency, the droop control device may distribute power from a power grid to the power storage device at a suitable rate in an effort to lower the power frequency produced by the power grid.

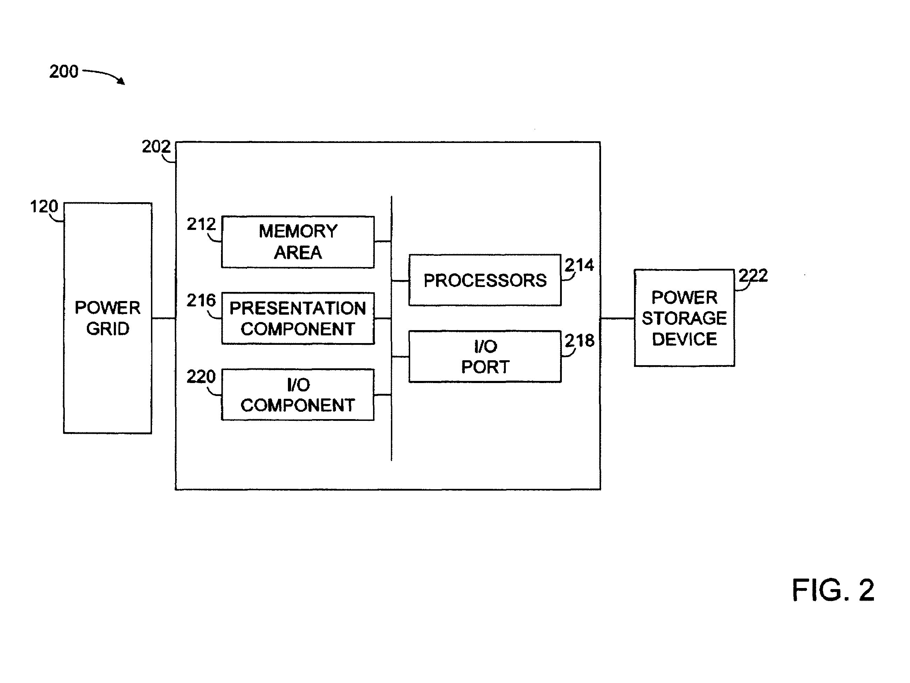

Figure 2 depicts a block diagram of an exemplary control system 200 illustrating a droop control device 202 electrically connected to power grid 120 and power storage device 222. In one embodiment, droop control device 202 is coupled between a power grid, such as power grid 120, and power storage device 222. As described in detail below, droop control device 202 is configured to distribute amperage to power storage device 222 based on a present frequency of power produced by power grid 120. It will be understood and appreciated by those of ordinary skill in the art guided by the teaching herein provided that the overall architecture of control system 200 shown in Figure 2 is merely an example of one suitable environment and is not intended to suggest any limitation as to the scope of use or functionality of the present disclosure. Neither should the overall architecture of control system 200 be interpreted as having any dependency or requirement related to any single component or combination of components illustrated therein.

Droop control device 202 shown in Figure 2 may be any suitable computing device. In one embodiment, droop control device 202 includes a personal computer, desktop computer, laptop computer, handheld device, and/or consumer electronic device. It should be noted, however, that the present disclosure is not limited to implementation on such computing devices, but may be implemented on any suitable computing device within the scope of embodiments described herein.

In one embodiment, droop control device 202 includes a bus 210 that directly or indirectly couples the following devices: memory area 212, one or more processors 214, one or more presentation components 216, input/output ports 218, and input/output components 220. In a further embodiment, droop control device 202 includes a frequency sensing component configured to sense a present frequency of power produced by power grid 120.

Bus 210 represents what may be one or more busses (such as an address bus, data bus, or combination thereof). Although the various blocks of Figure 2 are shown with lines for the sake of clarity, in reality, delineating various components is not so clear, and metaphorically, the lines would more accurately be grey and fuzzy. For example, one may consider a presentation component such as a display device to be an I/O component. Also, certain processors include onboard memory. It is recognized that such is the nature of the art, and reiterate that the diagram of Figure 2 is merely illustrative of an exemplary droop control device that can be used in connection with one or more embodiments of the present disclosure.

Droop control device 202 may include a variety of computer-readable media. By way of example, and not limitation, computer-readable media may include Random Access Memory (RAM), Read Only Memory (ROM), Electronically Erasable Programmable Read Only Memory (EEPROM), flash memory or other memory technologies; CDROM, digital versatile disks (DVD) or other optical or holographic media, magnetic cassettes, magnetic tape, magnetic disk storage or other magnetic storage devices, carrier wave or any other medium that can be used to encode desired information and be accessed by droop control device 202.

Memory area 212 may include computer-storage media in the form of volatile and/or nonvolatile memory. The memory may be removable, nonremovable, or a combination thereof. Exemplary hardware devices include solid-state memory, hard drives, optical-disc drives, and the like. In one embodiment, memory area 212 stores a look-up table of amperages to be distributed to a power storage device. Each amperage corresponds to a frequency of power of the power grid.

Droop control device 202 may include one or more processors 214 that read data from various entities, such as memory 212 or I/O components 220. In one embodiment, processor 214 is programmed to identify a present frequency of power produced by power grid 120. Once the present frequency of power produced by power grid is known, processor 214 is programmed to access a look-up table of amperages in memory 212, wherein each amperage corresponds to a frequency of power of power grid 120. Next, processor 214 is programmed to identify an amperage that corresponds to a present frequency of power produced by power grid 120, and then distribute the amperage to power storage device 222. Alternatively, processor 214 is programmed to withdraw a particular amount of amperage from the power storage device and deliver the withdrawn power from power storage device 222 to power grid 120.

In one embodiment, presentation component(s) 216 present data indications to a user or other device. Exemplary presentation components include a display device, speaker, printing component, vibrating component, and the like. In one embodiment, presentation component(s) 216 (e.g., a user interface) are configured to allow a user to input an amount of amperage to be withdrawn from power storage device 222, or an amount of amperage to be distributed to power storage device 222.

In one embodiment, I/O ports 218 allow droop control device 202 to be logically coupled to other devices including I/O components 220, some of which may be built in. Illustrative components include a microphone, joystick, game pad, satellite dish, scanner, printer, wireless device, and the like.

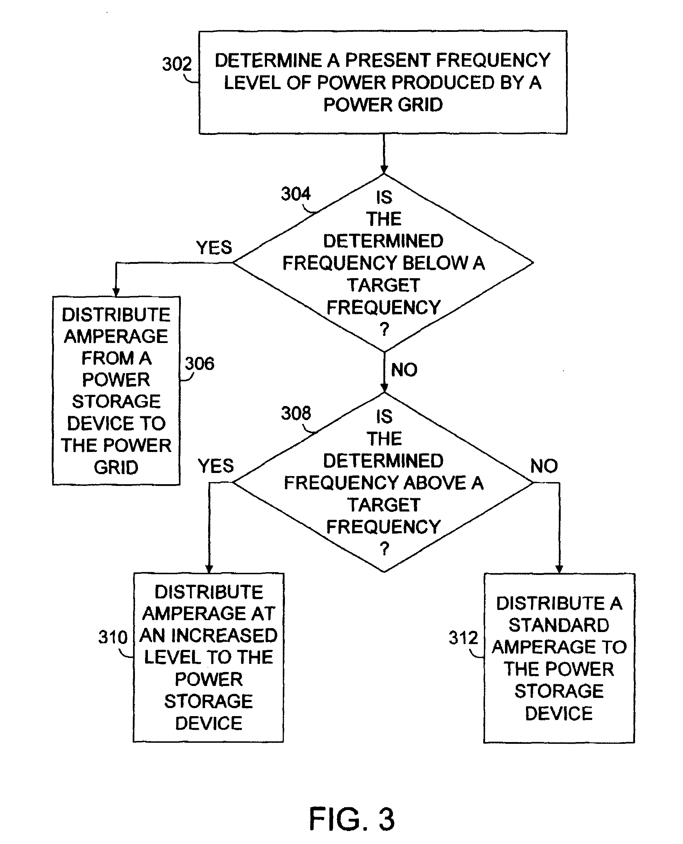

Referring now to Figure 3, a method for distributing power from a droop control device to a power storage device or a power grid will now be described with reference to Figures 1 and 2. At 302, a present frequency of power produced by a power grid (e.g., power grid 120) is determined. At 304, it is determined whether the present frequency of power produced by power grid 120 is below a target frequency, for example, a nominal frequency such as 60 Hz. At 306, if it is determined that the present frequency of power produced by power grid 120 is below the target frequency, amperage based on the present frequency of power produced by the power grid is distributed to a power storage device (e.g., power storage device 222). That is, the amount of amperage distributed to power storage device 222 may be directly related to the present frequency of power produced by power grid 120. In one embodiment, the amperage distributed to power storage device 222 is increased based on a difference between the present frequency of power produced by the power grid and a nominal standard grid frequency of power, for example. This may be achieved by utilizing a lookup table (described below) or other means, such as a mathematical formula, that directly relates an amount of amperage distributed with an amount the present frequency of power of power grid 120 is below a target frequency.

At 304, if it is determined that the present frequency of power produced by power grid 120 is not below the target frequency, at 308, it is determined whether the present frequency of power produced by power grid 120 is above the target frequency. At 310, if it is determined that the present frequency of power produced by power grid 120 is above the target frequency, the amperage based on the present frequency of power produced by power grid 120 is distributed to power storage device 222. That is, as the frequency of power produced by the power by the power grid 120 increases, the amperage distributed to power storage device 222 may increase. Thus, the amount of amperage distributed to power storage device 222 may be directly related to the present frequency of power produced by power grid 120. The amperage distributed to power storage device 222 may be decreased based on a difference between the present frequency of power produced by power grid 120 and a nominal standard grid frequency of power, for example. This may be achieved by utilizing a look-up table or other means, such as a mathematical formula that directly relates amperage distributed with the present frequency of power of power grid 120. For example, in one embodiment, a look-up table stored in memory 212 is accessed. The look-up table includes frequencies of power that correspond to amperages that may be distributed to power storage device 222. For example, if the present frequency of power produced by power grid 120 is 59.5 Hz, the look-up table is accessed to identify an amperage that corresponds to a frequency of 59.5 Hz. At 312, if it is determined that the present frequency of power of power grid 120 is not above the target frequency, a standard amperage (e.g., the amperage power storage device 222 withdraws from power grid 120 when power grid 120 is stabilized at the target frequency) is distributed to power storage device 222.

In one embodiment, the amperage distributed to power storage device 222 or withdrawn from power storage device 222 is distributed or withdrawn until a different frequency of power produced by power grid 120 is determined. Therefore, as the frequency of power produced by power grid 120 fluctuates in real time, the amperage distributed to or withdrawn from power storage device 222 may also fluctuate in real time. In an alternative embodiment, the amperage distributed to or withdrawn from power storage device 222 is distributed or withdrawn for a selected period of time. That is, droop control device 202 may identify a change in the frequency of power produced by power grid 120 in real time and therefore change an amount of amperage distributed to or withdrawn from power storage device 222 in real time. In a further embodiment, droop control device 222 may periodically identify a change in the frequency of power produced by power grid 120 and therefore provide an amperage distributed to power storage device 222 for a selected period of time. Alternatively, the amperage is distributed to or withdrawn from power storage device 222 until the frequency of power the power grid 120 is stabilized at a target grid frequency, for example, a nominal grid frequency, such as 60 Hz.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiment of the present invention are defined by the following numbered clauses:
1. A control system comprising a droop control device coupled between a power grid and a power storage device, the droop control device configured to distribute power at a selected amperage to the power storage device based on a present frequency of power produced by the power grid.
2. A control system in accordance with clause 1, wherein the droop control device comprises a frequency sensing component configured to sense the present frequency of power produced by the power grid.
3. A control system in accordance with any preceding clause, wherein the droop control device comprises a user interface configured to allow a user to determine the selected amperage.
4. A control system in accordance with any preceding clause, wherein the droop control device comprises a memory area for storing a look-up table of amperages to be distributed to the power storage device, each of the amperages corresponding to a frequency of power of the power grid.
5. A control system in accordance with any preceding clause, wherein the droop control device comprises a processor programmed to:
   identify the present frequency of power produced by the power grid;
   access a look-up table of amperages, wherein each of the amperages corresponds to a frequency of power of the power grid;
   identify a first amperage that corresponds to the present frequency of power produced by the power grid; and
   distribute power at the first amperage to the power storage device.
6. A control system in accordance with any preceding clause, wherein the droop control device comprises a processor programmed to:
   identify the present frequency of power produced by a power grid;
   access a look-up table of amperages, wherein each of the amperages correspond to a frequency of power of the power grid;
   identify a first amperage that corresponds to the present frequency of power produced by the power grid; and
   withdraw power at the first amperage from the power storage device and deliver the withdrawn power to the power grid.
7. A control system in accordance with any preceding clause, wherein power of the first amperage is withdrawn from the power storage device and distributed to the power grid until a power grid frequency is stabilized at a first power grid frequency.
8. A control system in accordance with any preceding clause, wherein the power storage device is a rechargeable battery.
9. A method for distributing power from a droop control device to a power storage device or a power grid, the method comprising:
   determining a present frequency of power produced by a power grid;
   distributing amperage to the power storage device, the amperage being based on the present frequency of power produced by the power grid; and
   distributing a first amperage from the power storage device to the power grid if the present frequency of power produced by the power grid is below a target threshold frequency of power.
10. A method in accordance with clause 9, further comprising increasing the amperage distributed to the power storage device based on an amount the present frequency of power produced by the power grid is higher than a nominal standard grid frequency of power.
11. A method in accordance with clause 9 or 10, further comprising decreasing the amperage distributed to the power storage device based on an amount the present frequency of power produced by the power grid is lower than a nominal standard grid frequency of power.
12. A method in accordance with any of clauses 9 to 11, wherein the first amperage is distributed from the power storage device to the power grid until the power grid frequency of power is stabilized at a target grid frequency.
13. A method in accordance with any of clauses 9 to 12, wherein the target grid frequency of power is a nominal standard grid frequency of power.
14. A method in accordance with any of clauses 9 to 13, wherein the power storage device is a rechargeable battery.
15. A method for distributing power from a droop control device to a power storage device, the method comprising:
   determining a present frequency of power produced by a power grid;
   accessing a look-up table of amperages that correspond to frequencies of power of the power grid;
   identifying an amperage that corresponds to the present frequency of power produced by the power grid; and
   distributing the identified amperage to the power storage device.
16. A method in accordance with any of clauses 9 to 15, wherein the identified amperage is distributed to the power storage device until a different frequency of power produced by the power grid is determined.
17. A method in accordance with any of clauses 9 to 16, wherein the identified amperage is distributed to the power storage device for a selected time period.

## Claims

1. A control system (200) comprising a droop control device (202) coupled between a power grid (120) and a power storage device (222), the droop control device configured to distribute power at a selected amperage to the power storage device based on a present frequency of power produced by the power grid.

2. A control system (200) in accordance with claim 1, wherein the droop control device (222) comprises a frequency sensing component configured to sense the present frequency of power produced by the power grid (120).

3. A control system (200) in accordance with any preceding claim, wherein the droop control device (202) comprises a user interface configured to allow a user to determine the selected amperage.

4. A control system (200) in accordance with any preceding claim, wherein the droop control device (202) comprises a memory area (212) for storing a look-up table of amperages to be distributed to the power storage device (222), each of the amperages corresponding to a frequency of power of the power grid (120).

5. A control system (200) in accordance with any preceding claim, wherein the droop control device (202) comprises a processor (214) programmed to:
identify the present frequency of power produced by the power grid (120);
access a look-up table of amperages, wherein each of the amperages corresponds to a frequency of power of the power grid;
identify a first amperage that corresponds to the present frequency of power produced by the power grid; and
distribute power at the first amperage to the power storage device (222).

6. A control system (200) in accordance with any preceding claim, wherein the droop control device (202) comprises a processor (214) programmed to:
identify the present frequency of power produced by a power grid (120);
access a look-up table of amperages, wherein each of the amperages correspond to a frequency of power of the power grid;
identify a first amperage that corresponds to the present frequency of power produced by the power grid; and
withdraw power at the first amperage from the power storage device (222) and deliver the withdrawn power to the power grid.

7. A control system (200) in accordance with any preceding claim, wherein power of the first amperage is withdrawn from the power storage device (222) and distributed to the power grid (120) until a power grid frequency is stabilized at a first power grid frequency.

8. A control system (200) in accordance with any preceding claim, wherein the power storage device (222) is a rechargeable battery.
